# EUROPÄISCHE PATENTANMELDUNG

(11) **EP 1 690 734 A2**
(43) Veröffentlichungstag der Anmeldung: **16.08.2006**
(21) Anmeldenummer: 06001031.1
(22) Anmeldetag: 18.01.2006
(51) Int. Cl.: B60Q 1/26

(54) **Fahrzeugleuchte**

(30) Priorität: 15.02.2005 DE 102005006824
(71) Anmelder: FER Fahrzeugelektrik GmbH, 99819 Eisenach (DE)
(72) Erfinder: Deichmüller, Horst, 99817 Eisenach (DE)
(74) Vertreter: Strasser, Wolfgang

(57) **Zusammenfassung**

Eine Fahrzeugleuchte (5) umfasst ein Leuchtengehäuse, das in eine Karosserieöffnung (3) einführbar ist, bis ein an ihm vorgesehener Anschlag (12) an einem Fahrzeugteil anliegt, eine im eingebauten Zustand die Karosserieöffnung (3) dicht verschließenden Dichteinrichtung (44) und wenigstens eine Rasteinrichtung (14, 15), die hinter den Rand der Karosserieöffnung (3) eingreift, um ein Herausbewegen der Fahrzeugleuchte (5) aus der Karosserieöffnung zu verhindern. Zur Verminderung der Toleranzanforderungen ist vorgesehen, dass das Leuchtengehäuse aus zwei Geäuseteilen (8, 10) besteht, von denen der erste Gehäuseteil (8) den Anschlag und die Rasteinrichtung und der zweite Gehäuseteil (10) die Dichteinrichtung aufweist, dass die beiden Gehäuseteile aus einer Vormontagestellung in eine Endmontagestellung in Einbaurichtung gegeneinander verschiebbar sind und dass an ihnen eine bistabile Federanordnung (34, 35) montiert ist, die sie in der Vormontagestellung entgegen der Einbaurichtung auseinander drückt und in der Endmontagestellung in Einbaurichtung so zu einander hin zieht, dass die Dichteinrichtung gegen die Karosserieaußenfläche angedrückt wird.

## Beschreibung

Die Erfindung betrifft eine Fahrzeugleuchte der im Oberbegriff von Anspruch 1 genannten Art.

Es ist bekannt, eine Fahrzeugleuchte zu ihrer Montage in einen Karosserieausschnitt bzw. eine Karosserieöffnung einzuschieben und sie dort mit Hilfe von einander gegenüberliegenden Rastelementen zu befestigen, von denen wenigstens eines so federnd ausgebildet ist, dass es dann, wenn die Leuchte vollständig eingeschoben ist, hinter der Karosserieöffnungskante einrasten kann.

Dieses Befestigungsprinzip wird auch bei Fahrzeugleuchten angewandt, die mit einer Dichtung zur Abdichtung der Karosserieöffnung ausgestattet sind.

Diese bekannten Lösungen haben folgende Nachteile:

Die Toleranzverträglichkeit bezüglich eines festen Sitzes und insbesondere der Dichtheit ist sehr gering, so dass die Toleranzanforderungen bei der Fertigung sehr hoch sind.

Die Montage ist insbesondere bei Ausführungen mit Abdichtung der Karosserieöffnung erschwert, da die Dichtung mit einem gewissen Überhub zusammengedrückt werden muss, damit das federnde Rastelement hinter dem Karosserieblech eingreifen kann.

Dadurch ist die zur Abdichtung erzeugbare Anpresskraft der Dichtung insbesondere bei großer Längenausdehnung der Leuchte sehr begrenzt, wodurch die Güte der Abdichtung nachteilig beeinflusst wird.

Demgegenüber liegt der Erfindung die Aufgabe zugrunde, eine Fahrzeugleuchte der eingangs genannten Art zu schaffen, die auf einfache Weise montiert werden kann, wesentlich geringeren Toleranzanforderungen genügt und dennoch eine sehr gute Abdichtung der Karosserieöffnung gewährleistet.

Zur Lösung dieser Aufgabe sieht die Erfindung die im Anspruch 1 niedergelegten Merkmale vor.

Durch diese erfindungsgemäßen Maßnahmen werden die beim Stand der Technik einem einzigen Gehäuseteil zukommenden Funktionen der Abstützung und Verrastung im Umgebungsbereich der Karosserieöffnung einerseits und des dichten Verschlusses dieser Karosserieöffnung andererseits zwei gegeneinander in Einschubrichtung verschiebbaren Gehäuseteilen zugeordnet.

Der erste Gehäuseteil weist dabei einen Anschlag auf, der verhindert, dass die Fahrzeugleuchte bei der Montage zu tief in die Karosserieöffnung eingeschoben wird. Am gleichen Gehäuseteil sind auch die Rasteinrichtungen vorgesehen, die bei vollständig eingeschobener Fahrzeugleuchte hinter dem Rand der Karosserieöffnung eingreifen. Ihr Abstand von der an der Karosserieaußenseite zur Anlage kommenden Fläche des Anschlags ist erfindungsgemäß völlig unkritisch, da der Anschlag als solcher keinerlei Dichtfunktionen übernimmt.

Diese ist vielmehr dem zweiten Gehäuseteil zugeordnet, der gegen den ersten Gehäuseteil durch die bistabile Federanordnung zunächst entgegen der Einschubrichtung "nach außen" gedrückt wird. Ist die erfindungsgemäße Fahrzeugleuchte soweit in die Karosserieöffnung eingeführt, dass der Anschlag des ersten Gehäuseteils zur Anlage an der Karosserieaußenseite kommt, kann durch das Ausüben einer weiteren, in Einschubrichtung wirkenden Kraft auf den zweiten Gehäuseteil dieser so lange gegen den ersten Gehäuseteil verschoben werden, bis die bistabile Federanordnung ihren Todpunkt überwindet und nunmehr eine Kraft ausübt, die den zweiten Gehäuseteil in Einschubrichtung gegen den ersten Gehäuseteil vorspannt. Dadurch wird einerseits der erste Gehäuseteil mit seinen Rasteinrichtungen gegen die Karosserieinnenseite gedrückt, während gleichzeitig der zweite Gehäuseteil mit seiner Dichtanordnung gegen die Karosserieaußenseite gepresst wird. In diesem Endmontage-Zustand ist es nicht mehr erforderlich, dass der Anschlag des ersten Gehäuseteils an der Karosserieaußenseite anliegt, da die Dichtfunktion vollständig von der Dichtanordnung des zweiten Gehäuseteils übernommen wird.

Die eben beschriebene Federwirkung in Einbaurichtung ermöglicht somit einen vorteilhaften Toleranzausgleich und somit relativ große Fertigungstoleranzen der zur Befestigung dienenden Funktionselemente.

Die Anpresskraft der Dichtanordnung kann durch entsprechende Auslegung der Federkraft je nach Erfordernis in weiten Grenzen variiert werden.

Der beim Stand der Technik beschriebene, erforderliche Überhub für das Zusammenpressen der Dichtung ist bei der erfindungsgemäßen Fahrzeugleuchte nicht erforderlich, so dass die maximale Eindrückkraft bei der erfindungsgemäßen Fahrzeugleuchte reduziert werden kann. Der für die Herstellung erforderliche Teile- und Montageaufwand erhöht sich bei der erfindungsgemäßen Lösung gegenüber dem Stand der Technik nicht, da die für die Befestigung erforderlichen Funktionselemente in ohnehin vorhandene Bauteile einbezogen und bisherige Rastfedern durch Federn mit neuer Funktion ersetzt werden.

Diese und weitere vorteilhafte Ausgestaltungen und Merkmale einer erfindungsgemäßen Fahrzeugleuchte sind in den Unteransprüchen niedergelegt.

Die Erfindung wird im folgenden anhand eines Ausführungsbeispiels unter Bezugnahme auf die Zeichnung beschrieben; in dieser zeigen:
- Figur 1: eine schematische Querschnittsansicht durch eine erfindungsgemäße Fahrzeugleuchte im vormontierten Zustand, die bereits in eine Karosserieöffnung eingesteckt ist, (Schnittlinie I-I in Fig. 5)
- Figur 2: eine der Figur 1 entsprechende Schnittansicht, in der die erfindungsgemäße Fahrzeugleuchte als Figur 1 im fertig montierten Zustand wiedergegeben ist,
- Figur 3: eine schematische Schnittansicht in einer zur Schnittebene der Figur 1 parallelen Ebene der erfindungsgemäßen Fahrzeugleuchte im vormontierten Zustand, (Schnittlinie III-III in Fig. 5)
- Figur 4: eine der Figur 3 entsprechende Schnittansicht im fertig montierten Zustand der erfindungsgemäßen Fahrzeugleuchte, und
- Figur 5: eine schematische Rückansicht der erfindungsgemäßen Fahrzeugleuchte aus den Figuren 1 bis 4.

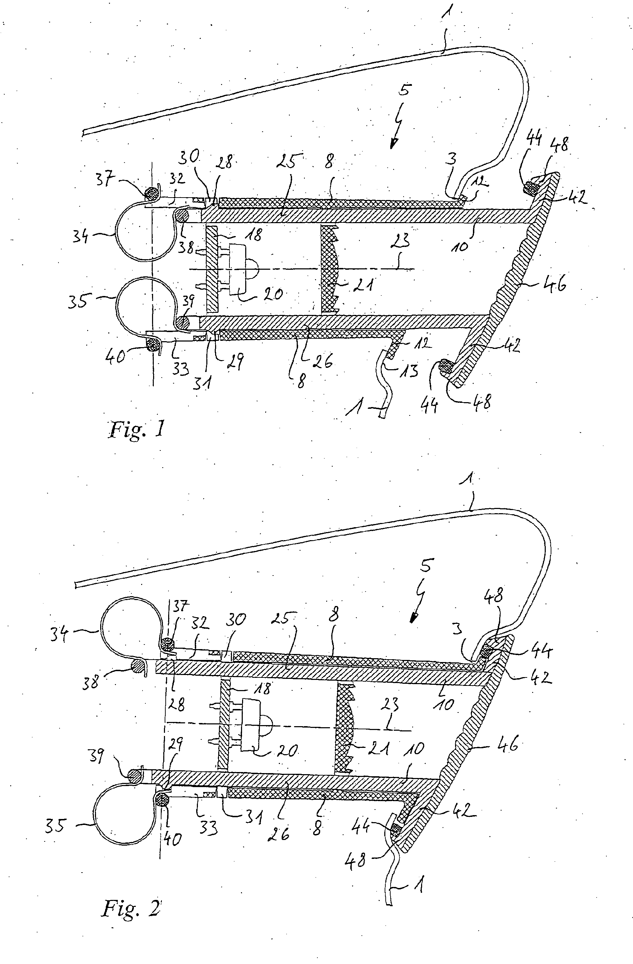

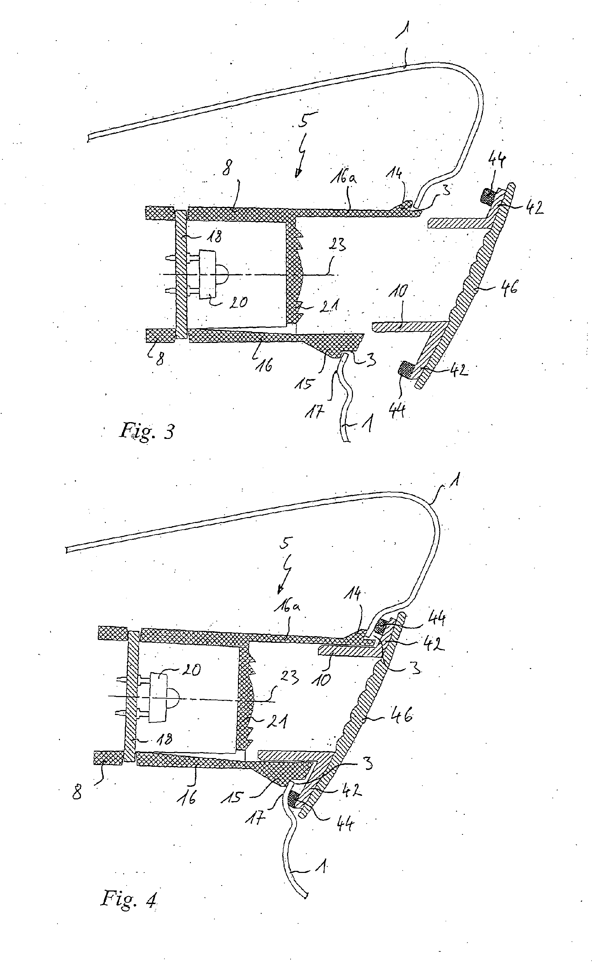

In den Figuren 1 bis 4 ist jeweils in schematischer Weise ein Teil einer Karosserie 1 eines Fahrzeugs mit einer Karosserieöffnung 3 dargestellt, in die eine erfindungsgemäße Fahrzeugleuchte 5 im vormontierten Zustand (Figuren 1 und 3) sowie im endgültig montierten Zustand (Figuren 2 und 4) von vorne her, d.h. in den Figuren 1 bis 4 von rechts nach links, eingeschoben ist.

Wie man diesen Figuren entnimmt, besitzt eine erfindungsgemäße Fahrzeugleuchte 5 ein Leuchtengehäuse, das aus zwei Gehäuseteilen 8, 10 besteht, die parallel zur Einführrichtung, d.h. in den Figuren von rechts nach links bzw. links nach rechts, gegeneinander verschiebbar sind.

Das erste Gehäuseteil 8 weist einen Anschlag 12 (siehe Figur 1) auf, der in Form eines umlaufenden, teilweise unterbrochenen Bundes quer zur Einführrichtung vorsteht, um die Einschiebetiefe des ersten Gehäuseteils 8 in die Karosserieöffnung 3 dadurch zu begrenzen, dass er im Umgebungsbereich der Karosserieöffnung 3 an der Karosserieaußenfläche 13 zur Anlage kommt.

Alternativ kann der Anschlag des ersten Gehäuseteil auch so ausgeführt sein, dass er an einem anderen feststehenden Fahrzeugteil innerhalb der Karosserie zur Anlage kommt.

Das erste Gehäuseteil 8 ist im wesentlichen als Hohlkörper ausgebildet, der an seinen beiden Enden offen ist.

Wie man insbesondere den Figuren 3 und 4 entnimmt, weist das erste Gehäuseteil 8 an seinem vorderen, d.h. in den Figuren rechten Stimende, Rastnasen 14, 15 auf, die auf ihrer von der Karosserieöffnung 3 abgewandten Rückseite schräge Rampenflächen und auf der der Karosserieinnenfläche 17 zugewandten Seite steile Anschlagsflächen besitzen. In dem in den Figuren 3 und 4 gezeigten, vollständig eingeschobenen Zustand stehen diese Rastnasen 14, 15 soweit quer zur Einschubrichtung vor, dass ihre hinter den Rand der Karosserieöffnung 3 eingreifenden Anschlagsflächen verhindern, dass das erste Gehäuseteil 8 ohne weiteres wieder aus der Karosserieöffnung 3 nach rechts herausgezogen werden kann.

Die Rastnasen 15 befinden sich am vorderen, freien Ende von durch Ausklinkungen in der Außenwand des ersten Gehäuseteils 8 ausgebildeten Zungen 16, 16a, die dann, wenn beim Einschieben des ersten Gehäuseteils 8 in die Karosserieöffnung 3 die schrägen Rampenflächen der Rastnasen 14, 15 über den Rand der Karosserieöffnung 3 hinweg laufen, soweit nach innen einfedern, dass die Rastnasen 14, 15 ohne weiters durch die Karosserieöffnung 3 hindurch treten können.

Die Abstände der steilen Anschlagsflächen der Rastnasen 14, 15 von der ihnen zugewandten Rückseite des von dem umlaufenden Bund gebildeten Anschlags 12 sind völlig unkritisch und müssen lediglich etwas größer als die Dicke des Karosserieblechs im Bereich der Karosserieöffnung 3 sein, so dass die Rastnasen 14,15 ohne weiteres hinter der Karosserieinnenfläche 17 einfedern können, wenn das erste Gehäuseteil 8 soweit in die Karosserieöffnung 3 eingeschoben ist, dass der Anschlag 12 an der Karosserieaußenfläche 13 zur Anlage kommt. Wie weiter unten noch genauer erläutert wird, kommen die Rückseite des Anschlags 12 einerseits und die steilen Anschlagsflächen der Rastnasen 14,15 in verschiedenen, zeitlich aufeinander folgenden Phasen des Montagevorgangs aber niemals gleichzeitig an der ihnen jeweils zugewandten Fläche des Karosserieblechs zur Anlage.

In seinem hinteren, in den Figuren 1 bis 4 linken Bereich, trägt das erste Gehäuseteil 8 eine Platine 18, auf der eine Vielzahl von Leuchtdioden 20 montiert ist, welche die Lichtquellen der erfindungsgemäßen Fahrzeugleuchte 5 bilden. Diese Platine 18 kann als gedruckte Schaltungsplatine ausgebildet sein, die auf einer oder beiden Flachseiten mit Leitungsbahnen versehen ist, die für die Stromversorgung der Leuchtdioden 20 sorgen.

Weiterhin ist das erste Gehäuseteil 8 einstückig mit Elementen 21 verbunden, die eine optische Funktion besitzen und bei denen es sich im vorliegenden Fall um Fressnell-Linsen handelt, die das von der jeweils zugehörigen Leuchtdiode 20 kommende Licht so parallelisieren, dass es ohne wesentliche Verluste aus der Fahrzeugleuchte 5 (in den Figuren 1 bis 4 nach rechts) austritt.

Es können auch die Lichtquellen partiell umschließende Reflektoren vorgesehen und vorzugsweise mit dem ersten Gehäuseteil 8 einstückig verbunden sein. Anstelle der Leuchtdioden 20 können auch Glühlampen als Lichtquellen verwendet werden.

Wie man den Figuren 1 bis 4 entnimmt, ist der zweite Gehäuseteil 10 ebenfalls als Hohlkörper ausgebildet. Seine Außenkontur und seine Außenabmessungen sind so an die Innenkontur und die Innenabmessungen des ersten Gehäuseteils 8 angepasst, dass er in diesem gleitend geführt parallel zur Einschubrichtung verschoben werden kann.

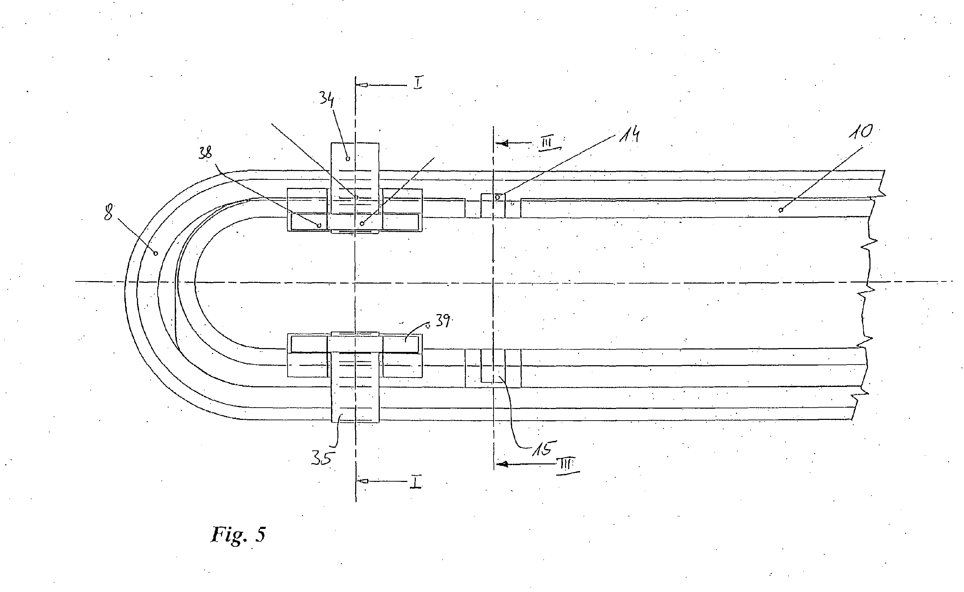

Wie man den Figuren 3 bis 5 entnimmt, ist die in Einschubrichtung verlaufende, axiale Länge des zweiten Gehäuseteils 10 über den größten Teil der sich senkrecht zur Zeichenebene der Figuren 3 und 4 erstreckenden Breite der Fahrzeugleuchte 5 gerade so bemessen, dass die Außenwand des zweiten Gehäuseteils 10 in dem in Figur 4 gezeigten, vollständig eingeschobenen Zustand die Rastnasen 14, 15 blockiert, so dass sie mit der Karosserieinnenfläche 17 nicht außer Eingriff treten können. Beim Einschieben der erfindungsgemäßen Fahrzeugleuchte 5 in die Karosserieöffnung 3 tritt diese Blockierwirkung nicht ein, da, wie in Figur 3 gezeigt, das zweite Gehäuseteil 10 in dem dort wiedergegebenen, vormontierten Zustand so weit gegen das erste Gehäuseteil 8 nach rechts verschoben ist, dass sich sein Stirnende noch außerhalb der Karosserieöffnung 3 befindet.

Um in diesem vormontierten Zustand die beiden Gehäuseteile 8, 10 zu einer Baueinheit zu verbinden, besitzt das zweite Gehäuseteil 10 zumindest in dem im Schnitt der Figuren 1 und 2 wiedergegebenen Bereich, vorzugsweise aber in mehreren über seine Breite verteilt angeordneten Bereichen, jeweils zwei einander bezüglich der Gehäuse-Längsachse 23 diametral gegenüberliegende Verlängerungsarme 25, 26, die sich über das Stirnende des das zweite Gehäuseteil 10 bildenden Hohlkörpers hinaus in Einschubrichtung erstrecken und dabei seine Außenkontur so fortsetzen, dass sie an der Innenwand des ersten Gehäuseteils 8 anliegen und hier eine Führung für die bereits erwähnte gegenseitige Verschiebung der beiden Gehäuseteile 8 und 10 gewährleisten. Im Bereich dieser Verlängerungsarme 25, 26 weist das erste Gehäuseteil 8 keine hinter dem Karosserieblech eingreifenden Rastnasen auf.

Im Bereich ihrer in den Figuren 1 und 2 linken Enden besitzen die Verlängerungsarme 25, 26 jeweils eine Rastnase 28, 29, die in entsprechende Ausnehmungen 30, 31 in der Wand des ersten Gehäuseteils 8 eingreift. Dabei sind die in den Figuren 1 und 2 nach rechts weisenden Flächen der Rastnasen 28, 29 so steil ausgebildet, dass sie über die ihnen gegenüberliegenden Wandflächen der Ausnehmungen 30, 31 nicht hinweg laufen können. Somit wird verhindert, dass das zweite Gehäuseteil 10 aus dem ersten Gehäuseteil 8 weiter nach rechts herausgezogen werden kann, als dies in Figur 1 dargestellt ist.

An die Ausnehmungen 30, 31 schließen sich in Einschubrichtung, d.h. in den Figuren 1 und 2 nach links, in der Innenwand des ersten Gehäuseteils 8 ausgebildete Kanäle 32, 33 an, deren Höhe so bemessen ist, dass die Rastnasen 28, 29 in ihnen ohne weiteres nach links gleiten können, wenn das zweite Gehäuseteil 10 aus der in Figur 1 (und Fig. 3) gezeigten Vormontage-Stellung in die in Figur 2 (und Fig. 4) wiedergegebene Endmontage-Stellung verschoben wird.

An dem in den Figuren 1 und 2 links liegenden Ende des ersten Gehäuseteils 8 sowie den entsprechenden Enden der Verlängerungsarme 25, 26 sind zwei im Schnitt der Figuren 1 und 2 Ω-förmige Formfedern 34, 35 so angelenkt, dass sie sich beim Einschieben des zweiten Gehäuseteils 10 in das erste Gehäuseteil 8 aus der in Figur 1 gezeigten Stellung um ihre Anlenkpunkte 37, 38 bzw. 39, 40 in die in Figur 2 gezeigte Stellung verschwenken können.

Die Lage der Anlenkpunkte 37, 40 am ersten Gehäuseteil 8 bezüglich der Anlenkpunkte 38, 39 am zweiten Gehäuseteil 10 ist dabei so gewählt, dass die Formfedern 34, 35 in der in Figur 1 gezeigten Vormontage-Stellung eine Kraft ausüben, die das zweite Gehäuseteil 10 bezüglich des ersten Gehäuseteils 8 nach rechts so weit verschiebt, dass die Rastnasen 28, 29 mit ihren steilen Stirnflächen an den rechten Innenflächen der Ausnehmungen 30, 31 zur Anlage kommen.

Wird dann nach dem Einstecken der Fahrzeugleuchte 5 in die Karosserieöffnung 3 bis zum Anliegen des Anschlags 12 an der Karosserieaußenfläche 13 auf das zweite Gehäuseteil 10 eine in Einschubrichtung wirkende Kraft ausgeübt, so übertragen die Formfedern 34, 35 diese Kraft zunächst auf das erste Gehäuseteil, das aber mit seinem Anschlag 12 an der Karosserieaußenseite 13 anliegt und deshalb nicht tiefer in die Karosserieöffnung 13 hineinrutschen kann. Im weiteren Verlauf erfolgt ein weiteres Spannen der Formfedern 34, 35 bis zum Erreichen einer Totpunktlage, nach deren Überwinden sie um ihre Anlenkpunkte weiterschwenken, bis sie die in Figur 2 gezeigte Stellung erreicht haben, in der die Formfedern 34, 35 auf das zweite Gehäuseteil 10 eine Kraft ausüben, die es bezüglich des ersten Gehäuseteils 8 in Einschubrichtung zu verschieben sucht. Die dabei auf das erste Gehäuseteil in Gegenrichtung ausgeübte Reaktionskraft wird von den Rastnasen 14, 15 aufgenommen, die sich an der Karosserieinnenfläche 17 abstützen.

Es ist hier also eine bistabile Federanordnung geschaffen, die aus einer Vormontage-Stellung in eine Endmontage-Stellung umschwenkt und dabei die Richtung der von ihr zwischen den Gehäuseteilen 8, 10 ausgeübten Kraft umkehrt.

Wie in den Figuren 1 bis 4 gezeigt, besitzt das zweite Gehäuseteil 10 auf seiner äußeren, d.h. in den Figuren rechten Seite, einen quer zur Einschubrichtung vorspringenden Flansch 42, der auf seiner der Karosserieaußenfläche 13 zugewandten Seite einen Dichtring 44 trägt. Wie die Figuren 2 und 4 wiedergeben, wird dieser Dichtring 44 im Endmontage-Zustand durch die Kraft der Formfedern 33, 35 in feuchtigkeitsdichter Weise gegen die Karosserieaußenfläche 17 angedrückt. Da das in den Figuren rechte Stirnende des vom zweiten Gehäuseteil 10 gebildeten Hohlkörpers durch eine Lichtdurchtrittsscheibe 46, die mit dem zweiten Gehäuseteil 10 einstückig ausgebildet sein kann, dicht verschlossen ist, ergibt sich somit ein absolut feuchtigkeitsdichter Verschluss der Karosserieöffnung 3 durch die eingebaute, erfindungsgemäße Fahrzeugleuchte 5.

Um eine immer gleichmäßige Anpressung des Dichtrings 44 zu gewährleisten, kann über zusätzliche Distanzelemente 48, die an den äußeren Enden des Flansches 42 ausgebildet sind und im Endmontage-Zustand an der Karosserieaußenfläche 13 anliegen, der Abstand des Flansches 42 von dieser Fläche konstant gehalten werden.

Eine Demontage der Fahrzeugleuchte kann dadurch erfolgen, dass mit einem Spezialwerkzeug, das in entsprechende Freimachungen im zweiten Gehäuseteil 10 eingreift, dieses gegen die Wirkung der Federn herausgezogen wird. Danach sind die Rastnasen 14, 15 am ersten Gehäuseteil 8 zur Entrastung zugänglich, nach der die erfindungsgemäße Fahrzeugleuchte 5 aus der Karosserieöffnung 3 heraus gezogen werden kann.

Statt der Ω-förmigen Formfedern 34, 35 können auch Drahtbügelfedern oder U-förmig ausgebildete Formfedern verwendet werden. Der Einsatz von Dreh- und Druckfedern ist ebenfalls denkbar. Durch die Anordnung einer lang gestreckten Formfeder mit zwei äußeren Anlenkpunkten an dem einen Gehäuseteil und einem mittleren Anlenkpunkt am anderen Gehäuseteil kann die gewünschte Funktion auch mit einer verminderten Anzahl von Federn erfüllt werden.

## Patentansprüche

1. Fahrzeugleuchte (5), die folgende Bestandteile umfasst:
ein Leuchtengehäuse, das von außen her in eine Karosserieöffnung (3) so weit einführbar ist, bis ein an ihm vorgesehener Anschlag (12) an einem Fahrzeugteil zur Anlage kommt,
eine im eingebauten Zustand die Karosserieöffnung (3) dicht verschließende Dichteinrichtung (44), und
wenigstens eine Rasteinrichtung (14, 15), die im eingebauten Zustand hinter den Rand der Karosserieöffnung (3) eingreift, um ein Herausbewegen der Fahrzeugleuchte (5) aus der Karosserieöffnung zu verhindern,
**dadurch gekennzeichnet, dass** das Leuchtengehäuse aus zwei Geäuseteilen (8, 10) besteht, von denen der erste Gehäuseteil (8) den Anschlag (12) und die wenigstens eine Rasteinrichtung (14, 15) aufweist, während an dem zweiten Gehäuseteil (10) die Dichteinrichtung (44) vorgesehen ist,
dass die beiden Gehäuseteile (8, 10) so aneinander gelagert sind, dass sie in Einbaurichtung aus einer Vormontagestellung in eine Endmontagestellung gegeneinander verschiebbar sind, und
dass an den beiden Geäuseteilen (8, 10) eine bistabile Federanordnung (34, 35) so montiert ist, dass sie diese in der Vormontagestellung entgegen der Einbaurichtung auseinander drückt und in der Endmontagestellung in Einbaurichtung so zu einander hin zieht, dass die Dichteinrichtung (44) von außen her gegen die Karosserieaußenfläche (13) angedrückt wird.

2. Fahrzeugleuchte nach Anspruch 1, **dadurch gekennzeichnet, dass** der erste Gehäuseteil (8) im wesentlichen als Hohlkörper ausgebildet ist, der zumindest an seinem in Einbaulage nach außen weisenden Ende offen ist und in dessen Inneren der zweite Gehäuseteil (10) verschiebbar gelagert ist.

3. Fahrzeugleuchte nach Anspruch 1 oder 2, **dadurch gekennzeichnet, dass** die Vormontagestellung durch eine Rasteinrichtung (28, 29, 30, 31) definiert ist, die entgegen der Einbaurichtung fest und in Einbaurichtung durch eine von außen her aufgebrachte, die Vorspannung der bistabilen Federanordnung (34, 35) überwindende Montagekraft entrastbar ist.

4. Fahrzeugleuchte nach einem der vorhergehenden Ansprüche, **dadurch gekennzeichnet, dass** der Anschlag (12) ein Bund ist, der an dem in Einbaulage nach außen weisenden Ende des ersten Gehäuseteils (8) vorgesehen ist und im eingebauten Zustand von außen an der Karosserieaußenfläche (13) anliegt.

5. Fahrzeugleuchte nach einem der Ansprüche 1 bis 3, **dadurch gekennzeichnet, dass** der Anschlag von einem Bereich des ersten Gehäuseteils (8) gebildet wird, der im eingebauten Zustand an einem hinter der Karosserieöffnung (3) angeordneten, feststehenden Fahrzeugteil zur Anlage kommt.

6. Fahrzeugleuchte nach einem der vorhergehenden Ansprüche, **dadurch gekennzeichnet, dass** das erste Gehäuseteil (8) Elemente (21) der Fahrzeugleuchte (5) trägt, die eine optische Funktion besitzen.

7. Fahrzeugleuchte nach Anspruch 6, **dadurch gekennzeichnet, dass** die eine optisch Funktion besitzenden Elemente (21) mit dem ersten Gehäuseteil (8) einstückig ausgebildet sind.

8. Fahrzeugleuchte nach einem der vorhergehenden Ansprüche, **dadurch gekennzeichnet, dass** das erste Gehäuseteil (8) Elemente (20) der Fahrzeugleuchte (5) trägt, die eine lichttechnische Funktion besitzen.

9. Fahrzeugleuchte nach einem der vorhergehenden Ansprüche, **dadurch gekennzeichnet, dass** das zweite Gehäuseteil (10) eine Lichtdurchtrittsscheibe (46) trägt.

10. Fahrzeugleuchte nach Anspruch 9, **dadurch gekennzeichnet, dass** das zweite Gehäuseteil (10) und die Lichtdurchtrittsscheibe (46) einstückig miteinander verbunden sind.

11. Fahrzeugleuchte nach Anspruch 8, **dadurch gekennzeichnet, dass** ein Flansch (42) des zweiten Gehäuseteils (10) über den umlaufender Bund des ersten Gehäuseteils seitlich übersteht und dass die Dichteinrichtung (44) so hinter dem Flansch (42) angeordnet ist, dass sie im eingebauten Zustand außerhalb des umlaufenden Bundes gegen die Karosserieaußenfläche (13) angedrückt wird..
